(19) Europäisches Patentamt
European Patent Office
Office européen des brevets

(11) EP 0 605 113 B1

(12) EUROPEAN PATENT SPECIFICATION

(45) Date of publication and mention
of the grant of the patent:
**04.06.1997  Bulletin 1997/23**

(51) Int Cl.6: **E21B 33/13**, C04B 28/18,
C09K 7/02

(21) Application number: **93309738.8**

(22) Date of filing: **06.12.1993**

(54) **Drilling fluid utilisation**

Verwendung von Bohrflüssigkeiten

Utilisation de boue de forage

(84) Designated Contracting States:
**DE FR GB IT NL**

(30) Priority: **16.04.1993  US 49056**
**30.12.1992  US 998279**

(43) Date of publication of application:
**06.07.1994  Bulletin 1994/27**

(73) Proprietor: **HALLIBURTON COMPANY**
**Duncan Oklahoma 73536 (US)**

(72) Inventors:
  • **Terry, Dralen T.**
    **Duncan, Oklahoma 73533 (US)**
  • **Onan, David D.**
    **Lawton, Oklahoma 73505 (US)**
  • **Totten, Patty L.**
    **Duncan, Oklahoma 73533 (US)**
  • **King, Bobby J.**
    **Duncan, Oklahoma 73533 (US)**
  • **Brake, Bobby G.**
    **Duncan, Oklahoma 73533 (US)**

(74) Representative: **Wain, Christopher Paul et al**
**A.A. THORNTON & CO.**
**Northumberland House**
**303-306 High Holborn**
**London WC1V 7LE (GB)**

(56) References cited:
EP-A- 0 178 213        US-A- 2 836 556
US-A- 4 176 720        US-A- 4 519 452

## Description

The present invention relates generally to the utilization of drilling fluids and, in particular, to their disposal after drilling.

A variety of drilling fluids are used in drilling well bores. Generally, the drilling fluids are solids containing water base gels or hydrocarbon base fluids which can be non-weighted or weighted with particulate weighting material such as barite. After a well bore is drilled, during which the drilling fluid used is circulated through the well bore, the circulation of the drilling fluid is stopped while the well is logged and a string of pipe is run in the well bore. After the pipe is run, the drilling fluid is cleaned up by circulating it downwardly through the interior of the pipe and upwardly through the annulus between the exterior of the pipe and the walls of the well bore while removing drilling solids and gas therefrom. Primary cementing operations are then performed in the well bore, i.e. the string of pipe disposed in the well bore is cemented therein by placing a cementing composition in the annulus between the pipe and the walls of the well bore. The cementing composition sets into a hard substantially impermeable mass whereby the pipe is bonded to the walls of the well bore and the annulus is sealed. When the cementing composition is run down the pipe and into the annulus, the drilling fluid in the pipe and annulus is displaced therefrom. The used drilling fluid is generally accumulated in a pit or tank and then disposed of.

The disposal of drilling fluid is time consuming and expensive, particularly in offshore drilling locations. In recent years, the expense has increased significantly in that drilling fluid often must be disposed of as a fluid which is hazardous to the environment. Thus, any environmentally safe use to which all or part of the drilling fluid can be put at a well site is highly advantageous in that it eliminates the need for subsequently disposing of all or part of the drilling fluid.

We have now devised a way of dealing with drilling fluid after it has been used for drilling. In particular, we have found that it can be converted into a cementitious composition which can be used for carrying out cementing operations in the well bore or otherwise as desired, or can simply be safely disposed of.

According to the present invention, there is provided a method of drilling a well bore utilizing a circulating drilling fluid and subsequently disposing of the drilling fluid, which method comprises the steps of:

(a) drilling a well bore using a drilling fluid containing an aqueous suspension of condensed silica fume in an amount whereby the weight ratio of the aqueous suspension of condensed silica fume to the total of other drilling fluid components is from 25:75 to 100:0, said aqueous suspension comprising condensed silica fume particles having diameters less than 1 micrometer and water in a weight ratio of condensed silica fume to water of from 2:3 to 3:2;

(b) converting a first portion of said drilling fluid into a cementitious composition whereby it will subsequently set into a hard cementitious mass, by combining therewith a set activator which is an alkaline earth metal hydroxide or oxide, or any mixture of two or more thereof; and

(c) placing the first set activated cementitious drilling fluid composition in one or more desired locations to set.

In a variation of the above method, the invention also provides a method which includes after step (a) but before step (b), the step of:

(i) placing pipe in said well bore while said well bore contains said drilling fluid, said pipe being of a size such that an annular space is formed between said pipe and the walls of said well bore; and

after step (b) but before step (c) the step of:

(ii) pumping the set activated cementitious first portion of drilling fluid downwardly through the interior of said pipe and upwardly into said annulus between said pipe and the walls of said well bore whereby a remaining second portion of said drilling fluid in said well bore is displaced from said well bore and said set activated first portion of said drilling fluid is placed in said annulus;

and after step (c), the further steps of:

(iii) converting a second portion of drilling fluid into a cementitious composition whereby it will subsequently set into a hard cementitious mass by combining therewith a set activator selected from calcium hydroxide, magnesium oxide and mixtures thereof; and

(iv) placing said set activated cementitious second portion of said drilling fluid in one or more desired locations to set.

The method of the present invention basically comprises using a drilling fluid comprised of an aqueous suspension of condensed silica fume, with or without other drilling fluid components, drilling a well bore using the drilling fluid, and then converting the drilling fluid into a cementitious composition whereby it will subsequently set into a hard cementitious mass by combining a set activator therewith. The mass can be placed in at least one location where it sets into an environmentally safe cementitious mass therein.

The aqueous suspension of condensed silica fume is present in the drilling fluid in an amount whereby the weight ratio of the aqueous suspension of condensed silica fume to the total of other drilling fluid components therewith is in the range of from about 25:75 to about 100:0. The aqueous suspension of condensed silica fume is comprised of condensed silica fume particles having diameters less than about 1 micrometer and water in a weight ratio of condensed silica fume to water in the range of from about 2:3 to about 3:2. The aqueous suspension also preferably includes a dispersing agent to facilitate the dispersion of the condensed silica fume particles in the water and to maintain the particles suspended therein.

A set delaying agent is also preferably combined with the set activated cementitious drilling fluid composition to increase the time in which the composition sets after the set activator is combined therewith.

Well bores are most commonly drilled using a rotary drill bit connected to a string of drill pipe. The drill pipe and bit are rotated and a drilling fluid, generally a water base gel or a hydrocarbon base fluid with or without weighting material suspended therein is circulated downwardly through the drill pipe, through ports in the drill bit and then upwardly through the annulus between the drill pipe and the walls of the well bore to the surface. An example of a water base gel is an aqueous solution of a clay such as bentonite containing particulate weighting material such as barite. An example of a hydrocarbon base drilling fluid is an inverted (oil external phase-water internal phase) emulsion with an oil to water ratio of from 100:0 to 50:50 where the water phase contains soluble salts of Sodium or Calcium chlorides up to saturation. The hydrocarbon base drilling fluid may also contain an emulsifier, weighting material and gelling agent.

The drilling fluid carries cuttings produced by the drill bit to the surface which are separated from the drilling fluid as is any gas therein. A reservoir of circulating drilling fluid is maintained on the surface, and the drilling fluid is pumped from the reservoir by circulating pumps back into the drill string. When the well bore has reached its desired depth, the drilling and the circulation of drilling fluid are stopped, the drill pipe and bit are removed from the well bore, subterranean formations penetrated by the well bore are usually logged and pipe to be cemented in the well bore is run therein.

After the pipe to be cemented has been run in the well bore, a primary cementing operation is carried out whereby the drilling fluid in the well bore is displaced out of the well bore by a cement slurry and one or more liquid spacers which are pumped downwardly through the pipe and then upwardly into the annulus between the pipe and the walls of the well bore. The cement slurry hardens into a substantially impermeable solid mass in the annulus which bonds the pipe to the walls of the well bore and seals the annulus whereby formation fluids are prevented from flowing into the annulus between subterranean zones penetrated by the well bore and/or to the surface.

As mentioned above, the used drilling fluid which is displaced from the well bore during primary cementing must often be disposed of as a hazardous fluid under environmental protection laws. Such disposal of the drilling fluid is time consuming and expensive, particularly at offshore drilling locations where the used drilling fluid must be displaced into a tanker, transported to shore, unloaded and disposed of on shore in an environmentally safe manner.

The present invention provides methods of drilling a well bore utilizing a circulating drilling fluid and subsequently disposing of the drilling fluid by converting it into a cementitious composition which is used in cementing operations carried out in the well bore and/or otherwise placed in one or more locations wherein it sets into hard environmentally safe cementitious masses.

The methods of this invention may comprise the following steps.

1. A drilling fluid is formed using an aqueous suspension of condensed silica fume as the single component thereof or as a principal component therein along with other drilling fluid components. That is, the drilling fluid can be made up of an aqueous suspension of condensed silica fume as the only component or the only component other than minor portions of additives such as fluid loss control additives, weighting materials and the like; or the aqueous suspension of condensed silica fume can be combined with other aqueous base or hydrocarbon base drilling fluid components. Thus, the weight ratio of the aqueous suspension of condensed silica fume to the total of other drilling fluid components therewith can be in the range of from about 25:75 to about 100:0. The other components of the drilling fluid can be additives such as fluid loss control agents, weighting materials and the like, or the components of water or hydrocarbon base drilling fluids so long as such components don't adversely react with the aqueous suspension of condensed silica fume component. The aqueous suspension of condensed silica fume is comprised of condensed silica fume particles having diameters less than about 1 micrometer and water in a weight ratio of condensed silica fume to water in the range of from about 2:3 to about 3:2.

2. After the drilling fluid is formed, it is used for drilling a well bore in a conventional manner.

3. Upon completion of the drilling of the well bore, the drilling fluid is converted into a cementitious composition whereby it will subsequently set into a hard cementitious mass by combining a set activator with the drilling fluid selected from the group consisting of alkaline earth metal hydroxides and oxides such as calcium hydroxide, barium hydroxide, magnesium oxide, strontium oxide and mixtures thereof.

4. The resulting set activated cementitious drilling fluid composition is placed in one or more desired locations whereby it sets into hard environmentally safe cementitious masses therein. One of the above mentioned locations can be a location in the well bore. That is, a part of the cementitious drilling fluid composition can be utilized for carrying out well bore cementing operations such as primary cementing. The remaining cementitious drilling fluid composition can be placed in other above or below ground locations and permitted to set into environmentally safe cementitious masses therein.

Condensed silica fume, also known as amorphous silica, silica dust or volitized silica is commercially available as an ultra fine powder consisting of submicron size spheres having an average diameter of about 0.1 micrometer. Condensed silica fume is a by-product material produced in the manufacture of silicon and ferrosilicon. Silicon and ferrosilicon are obtained by subjecting quartz (when silicon is produced) or quartz and an iron bearing material (when ferrosilicon is produced) to reduction with coke or coal and wood chips in an open electric arc furnace. The reduction reaction involves an intermediate reaction wherein a gaseous suboxide of silicon is formed and part of the gaseous suboxide of silicon escapes into the atmosphere. The gaseous suboxide of silicon reacts with oxygen in the atmosphere and condenses to form glassy microscopic particles known as condensed silica fume.

The condensed silica fume is recovered by filtration and is characterized by having a very fine particle size. The average size of condensed silica fume particles is about 0.1 micrometer which is about 100 times smaller than that of API Portland cement and about 10 times smaller than very fine cements such as those described in U.S. Patent No. 4,761,183 to Clark and U.S. Patent No. 4,160,674 to Sawyer. The specific surface area of condensed silica fume particles is about 20,000 square meters per kilogram, and the condensed silica fume generally contains more than about 90% amorphous silicon dioxide. The specific chemical composition of condensed silica fume varies in accordance with the particular silicon product produced.

The condensed silica fume can be obtained commercially in a dry powder form or in a relatively concentrated aqueous slurry form. When obtained in a slurry form, the slurry generally has a weight ratio of condensed silica fume to water in the range of from about 2:3 to about 3:2.

In whatever form the condensed silica fume is obtained, it is combined with water or additional water to form an aqueous suspension of condensed silica fume having a weight ratio of condensed silica fume to water in the range of from about 2:3 to about 3:2. Preferably, a dispersing agent is combined with the water to facilitate the dispersal of the silica fume particles in the water and maintain the particles in suspension therein. While various dispersing agents can be used, a particularly suitable dispersing agent is comprised of the condensed polymer product of an aliphatic ketone, an aliphatic aldehyde and a compound which introduces acid groups into the condensation polymer. Such a dispersing agent is disclosed in U.S. patent specification no. 4818288 (Aignesberger et al.), to which reference should be made.

The most preferred dispersing agent of the type described above for use in accordance with this invention is comprised of the condensation polymer product of acetone, formaldehyde and sodium sulfite. The dispersing agent is generally included in the aqueous suspension of silica fume in an amount in the range of from about 0.1% to about 3% by weight of water in the suspension. Generally, the above described dispersing agent is commercially available in an aqueous solution containing the dispersing agent in an amount in the range of from about 30% to about 35% by weight of the solution.

As mentioned above, a drilling fluid is formed in accordance with this invention by using the above-described aqueous suspension of condensed silica fume as the drilling fluid or as a component of an aqueous or hydrocarbon base drilling fluid. The components of most commonly used water base gels and hydrocarbon base drilling fluids do not adversely react with the aqueous suspension of condensed silica fume. As also mentioned above, the aqueous suspension of condensed silica fume is included in the drilling fluid in an amount whereby the weight ratio of the aqueous suspension of condensed silica fume to the total of other drilling fluid components therein is in the range of from about 25:75 to about 100:0.

The presence of the aqueous suspension of condensed silica fume in the drilling fluid is beneficial in that it functions to lower friction pressures during drilling operations, it improves the solids carrying capability and fluid loss control properties of the drilling fluid and reduces the overall weight of the drilling fluid.

After the drilling fluid has been utilized for drilling a well bore, it can be removed from the well bore in the usual manner, taken to a location of disposal and then converted into a cementitious composition by combining a set activator selected from the group consisting of alkaline earth metal hydroxides and oxides and mixtures thereof therewith. The presence of the set activator in the drilling fluid converts the drilling fluid to a cementitious composition which subsequently sets into a hard cementitious mass. Preferably, the set activator is calcium hydroxide and is combined with the drilling fluid in an amount whereby the weight ratio of condensed silica fume in the drilling fluid to calcium hydroxide is in the range of from about 1:1.5 to about 3:1.

In a more preferred method, after pipe such as casing has been placed in the well bore, a first portion of the drilling fluid is converted into a cementitious composition by circulating it to the surface and converting it into a cementitious composition by combining a set activator therewith as described above.

The converted first portion of the drilling fluid preferably includes a set delaying additive for increasing the time in which the drilling fluid cementitious composition sets after the set activator is combined therewith. A variety of set delaying additives heretofore utilized in cement compositions can be utilized. Preferably, the set delaying additive is selected from the group consisting of a copolymer of AMPS® (2-acrylamido-2-methyl propane sulfonic acid) and acrylic acid, tartaric acid, calcium lignosulfonate, ammonium lignosulfonate and mixtures of such additives. Most preferably, the set delaying additive is calcium lignosulfonate present in the drilling fluid composition in an amount in the range of from about 0.1% to about 2% by weight of the composition. A calcium lignosulfonate salt can be obtained commercially in an aqueous solution containing the salt in an amount in the range of from about 40% to about 60% by weight of the solution.

Once formed, the set activated cementitious first portion of the drilling fluid is pumped downwardly through the interior of the pipe disposed in the well bore and upwardly into the annulus between the pipe and the walls of the well bore whereby the remaining second portion of the drilling fluid in the well bore is displaced therefrom and the set activated first portion of the drilling fluid is placed in the annulus. The set activated first portion of the drilling fluid is permitted to set into a hard cementitious mass in the annulus.

The second portion of the drilling fluid displaced from the well bore is subsequently converted into a cementitious composition whereby it will set into a hard cementitious mass by combining a set activator therewith as described above. The second portion of the drilling fluid can be activated and utilized or disposed of at the well site, or it can be transported to a location remote from the well site, converted to a cementitious composition, and placed in an above ground or a below ground location whereby it sets into a hard environmentally safe cementitious mass therein.

The aqueous suspension of condensed silica fume is prepared by mixing the water, condensed silica fume and dispersing agent, if used. The aqueous suspension is then used directly as a drilling fluid or combined with water base or hydrocarbon base drilling fluid components in the amount described above. If desired, the aqueous suspension of condensed silica fume can be preformed by mixing the various components thereof at a location remote from the well site, or the components can be mixed at the well site just prior to use. In cementing operations carried out at offshore well locations, the non-activated drilling fluid comprised of or containing the aqueous suspension of condensed silica fume is preferably preformed on land and then delivered to the offshore location. When the location of the well site is on land, it is generally most convenient and economical to mix the components of the non-activated drilling fluid at the well site and mix the set-activator and set delaying additive, if used, with the drilling fluid just prior to utilizing the resulting cementitious drilling fluid composition in cementing operations.

When the non-activated drilling fluid is formed at the well site, it can be preformed and stored until use or the various components of the drilling fluid can be mixed on-the-fly. The set-activator and set delaying additive, if used, can also be mixed with the non-activated drilling fluid on-the-fly as the resulting set-activated cementitious drilling fluid composition is pumped into a subterranean zone to be cemented by way of the well bore penetrating the zone. The term "on-the-fly" is used herein to mean that the components are individually pumped into and are mixed as they flow through the well bore.

A preferred non-activated drilling fluid for use in accordance with this invention is comprised of water, particulate condensed silica fume consisting of particles having diameters less than about 1 micrometer and having an average particle diameter of about 0.1 micrometer suspended in the water in a weight ratio of condensed silica fume to water in the range of from about 1:2 to about 1.5:1, a dispersing agent comprised of the condensation polymer product of acetone, formaldehyde and sodium sulfite present in an amount sufficient to maintain the condensed silica fume particles in suspension, and other drilling fluid components present in an amount whereby the weight ratio of the aqueous suspension of condensed silica fume including the dispersing agent to the other drilling fluid components is in the range of from about 25:75 to about 100:0. When the drilling fluid is activated to convert it to a cementitious composition, a set activator, preferably calcium hydroxide, is combined with the drilling fluid in an amount whereby the weight ratio of condensed silica fume to calcium hydroxide is in the range of from about 1:1.5 to about 3:1. When a set delaying additive is included in the composition, preferably calcium lignosulfonate, it is added thereto, either before or after the drilling fluid is activated, in an amount sufficient to delay the set of the composition until after it is placed in a zone to be cemented.

In the most preferred non-activated drilling fluid for use in accordance with this invention, the weight ratio of condensed silica fume to water in the aqueous suspension of condensed silica fume is about 1:1, the above described dispersing agent is present in the aqueous suspension in an amount of about 2.5% by weight of water therein and the aqueous suspension is present in the drilling fluid in an amount whereby the weight ratio of the aqueous suspension including dispersing agent to other drilling fluid components therein is in the range of from about 25:75 to about 100:0. When the drilling fluid is activated, calcium hydroxide is combined therewith in an amount whereby the weight ratio of condensed silica fume to calcium hydroxide is about 2:1. A calcium lignosulfonate set delaying agent is preferably included in the composition in an amount of about 0.3% by weight of the composition.

In performing the methods of this invention, the non-activated drilling fluid is formed and circulated in the well bore being drilled. At a proper time after drilling has been completed, the set-activator is combined with the non-activated drilling fluid and the resulting cementitious composition is placed in at least one location wherein it sets into a hard cementitious mass. Generally, a first portion of the drilling fluid is set activated and pumped into a zone in the well bore to be cemented, e.g., the annulus. As the set-activated portion of the drilling fluid is placed in the zone to be cemented, the unused portion of non-activated drilling fluid is displaced from the well bore. The unused portion of the non-activated drilling portion can be transported to a location of use or disposal, combined with the set-activator, placed in an environmentally safe location and permitted to set into a cementitious mass. As indicated above, the methods of the present invention are particularly suitable for performing primary cementing in a well bore. However, the methods can be utilized for performing other cementing procedures in the well bore such as cementing zones of lost circulation therein.

In order to further illustrate the methods of this invention, the following Examples are given by way of illustration only.

## Example 1

A cementitious composition of this invention was prepared containing the following components and amounts.

| Component | Amount, parts by weight |
|---|---|
| Silica Fume | 300 |
| Water | 400 |
| Liquid Dispersing Agent[1] | 40 |
| Liquid Set Delaying Additive[2] | 13 |
| Calcium Hydroxide Activator | 300 |
| Drilling Fluid[3] | 263.25 |
| Total | 1316.25 |

[1] A 33% by weight aqueous solution of the condensation polymer product of acetone, formaldehyde and sodium sulfite.

[2] A 40% by weight aqueous solution of calcium lignosulfonate.

[3] 8.8 pounds/U.S. gallon ($1054 kg/m^3$) fresh water mud (30 parts by weight bentonite and 350 parts fresh water).

A test sample of the above composition was tested for 72 hour compressive strength at 80°F (26.7°C) in accordance with the API Specification for Materials and Testing for Well Cements, API Specification 10A, 21st Edition dated September 1, 1991, of the American Petroleum Institute, Washington, D.C. The result of the test was that the composition had a compressive strength of 1240 psi (8.54 MPa).

## Example 2

Another cementitious composition of this invention was prepared containing the following components and amounts.

| Component | Amount, parts by weight |
|---|---|
| Silica Fume | 300 |
| Water | 675 |
| Liquid Dispersing Agent[1] | 30.38 |
| Magnesium Oxide Activator | 10.13 |
| Calcium Hydroxide Activator | 150 |
| Drilling Fluid[2] | 874.13 |
| Total | 2039.64 |

[1] A 33% by weight aqueous solution of the condensation polymer product of acetone, formaldehyde and sodium sulfite.

[2] 8.8 pounds/U.S. gallon (1054 kg/m$^3$) fresh water drilling mud (100 parts by weight bentonite, 116.7 parts fresh water, 13.3 parts liquid dispersant and 3.3 parts sodium hydroxide).

A test sample of the above composition was tested for 24 hour compressive strength of 100°F (37.8°C). The result of the test was 500 psi (3.45MPa).

The cement compositions exemplified in Examples 1 and 2 can be made in the methods of the invention by mixing the components in the indicated amounts in order to be able to utilise the drilling fluid after its use for drilling.

## Claims

1. A method of drilling a well bore utilizing a circulating drilling fluid and subsequently disposing of the drilling fluid, which method comprises the steps of:

   (a) drilling a well bore using a drilling fluid containing an aqueous suspension of condensed silica fume in an amount whereby the weight ratio of the aqueous suspension of condensed silica fume to the total of other drilling fluid components is from 25:75 to 100:0, said aqueous suspension comprising condensed silica fume particles having diameters less than 1 micrometer and water in a weight ratio of condensed silica fume to water of from 2:3 to 3:2;
   (b) converting a first portion of said drilling fluid into a cementitious composition whereby it will subsequently set into a hard cementitious mass, by combining therewith a set activator which is an alkaline earth metal hydroxide or oxide, or any mixture of two or more thereof; and
   (c) placing the first set activated cementitious drilling fluid composition in one or more desired locations to set.

2. A method according to claim 1, which includes after step (a) but before step (b), the step of:

   (i) placing pipe in said well bore while said well bore contains said drilling fluid, said pipe being of a size such that an annular space is formed between said pipe and the walls of said well bore; and
   after step (b) but before step (c) the step of:
   (ii) pumping the set activated cementitious first portion of drilling fluid downwardly through the interior of said pipe and upwardly into said annulus between said pipe and the walls of said well bore whereby a remaining second portion of said drilling fluid in said well bore is displaced from said well bore and said set activated first portion of said drilling fluid is placed in said annulus;
   and after step (c), the further steps of:
   (iii) converting a second portion of drilling fluid into a cementitious composition whereby it will subsequently set into a hard cementitious mass by combining therewith a set activator selected from calcium hydroxide, magnesium oxide and mixtures thereof; and
   (iv) placing said set activated cementitious second portion of said drilling fluid in one or more desired locations to set.

3. A method according to claim 1 or 2, wherein the set activator is combined with the first portion of drilling fluid and, when dependant on claim 2, the second portion of drilling fluid in an amount whereby the weight ratio of condensed silica fume to set activator in said drilling fluid is from 1:1.5 to 3:1.

4. A method according to claim 1, 2 or 3, wherein the set activator is calcium hydroxide, barium hydroxide, magnesium oxide, strontium oxide or any mixture of two or more thereof.

5. A method according to claim 1, 2, 3 or 4, wherein a set delaying additive is combined with the set activated first portion of said drilling fluid.

6. A method according to claim 5, wherein the set delaying additive is a copolymer of AMPS[R] and acrylic acid, tartaric acid, calcium lignosulfonate, ammonium lignosulfonate or any mixture of two or more of said additives.

7. A method according to claim 6, wherein the set delaying additive is calcium lignosulfonate and it is combined with said set activated drilling fluid in an amount of from 0.1% to 2% by weight of said drilling fluid.

8. A method according to any previous claim, wherein a dispersing agent comprised of the condensation polymer product of acetone, formaldehyde and sodium sulfite is combined with the first portion of drilling fluid in accordance with step (a), wherein the dispersing agent is present in the suspension in an amount of from 0.1% to 3% by weight of the water therein.

**Patentansprüche**

1. Eine Vorgehensweise der Bohrung eines Bohrlochs, wobei ein umgewälzter Spülschlamm verwendet wird sowie das nachträgliche Entsorgen des Spülschlamms. Die Vorgehensweise setzt sich aus den folgenden Schritten zusammen:

   (a) Bohren eines Bohrlochs unter Verwendung eines Spülschlamms, der eine wässerige Silikakondensatsuspension in Mengen mit dem Gewichtsverhältnis der wässerigen Silikakondensatsuspension zur Gesamtmenge anderer Spülschlammbestandteile im Bereich von 25:75 und 100:0 enthält. Besagte **wässerige Silikakondensatsuspension umfaßt** Silikakondensatsuspensionspartikel mit einem Durchmesser von weniger als 1 Mikrometer und Wasser im Gewichtsverhältnis der Silikakondensatsuspension zum Wasser von 2:3 bis 3:2.

   (b) Umwandlung eines ersten Anteils besagten Spülschlamms in eine zementöse Komposition, wodurch diese sich nachträglich in eine harte zementöse Masse verhärtet, indem ein Härtungsmittel, d.h. ein Erdalkalimetallhydroxid, -oxid oder eine beliebige Mischung aus zwei oder mehreren dieser Bestandteile mit dem Anteil vermischt wird; und

   (c) Plazieren der ersten, durch Härtungsmittel aktivierten, zementösen Spülschlammkomposition an einem oder mehreren gewünschten Orten, um diese sich dort verhärten zu lassen.

2. Eine Vorgehensweise nach Anspruch 1, die Schritt (a) beinhaltet, jedoch vor Schritt (b) den folgenden Schritt umfaßt:

   (i) Plazieren eines Rohrs in besagtes Bohrloch, während dieses besagten Spülschlamm enthält, wobei besagtes Rohr einen Umfang hat, der zum Bilden eines Ringraums zwischen besagtem Rohr und den Wänden besagten Bohrlochs führt; und
   nach Schritt (d), jedoch vor Schritt (c) den folgenden Schritt
   (ii) Pumpen des mit Härtungsmittel aktivierten zementösen ersten Anteils des Spülschlamms abwärts durch den Innenraum besagten Rohrs und aufwärts in besagten Ringraum zwischen besagtem Rohr und besagtem Bohrloch, wodurch ein restlicher zweiter Anteil besagten Spülschlamms in besagtem Bohrloch aus diesem verdrängt und besagter mit Härtungsmittel aktivierter erster Anteil besagten Spülschlamms in besagtem Ringraum plaziert wird;
   und nach Schritt (c) den weiteren Schritt des
   (iii) Umwandelns des zweiten Anteils des Spülschlamms in eine zementöse Komposition, wodurch sich diese größtenteils zu einer harten zementösen Masse verhärtet, indem ein aus Kalziumhydroxid, Magnesiumoxid und Gemischen aus diesen gewähltes Härtungsmittel mit dieser Komposition vermischt wird; und
   (iv) Plazieren besagten, mit Härtungsmittel aktivierten, zementösen zweiten Anteils besagten Spülschlamms an einem oder mehreren gewünschten Orten, um sich dort zu verhärten.

3. Eine Vorgehensweise nach den Ansprüchen 1 oder 2, wobei das Härtungsmittel mit dem ersten Anteil des Spülschlamms vermischt wird, wenn sich, je nach Anspruch 2, der zweite Anteil des Spülschlamms in Mengen befindet, deren Gewichtsverhältnis der Silikakondensatsuspension zum Härtungsmittel in besagtem Spülschlamm zwischen 1:1,5 und 3:1 liegt.

4. Eine Vorgehensweise nach Ansprüchen 1, 2 oder 3, wobei das Härtungsmittel Kalziumhydroxid, Bariumhydroxid, Magnesiumoxid, Strontiumoxid oder ein beliebiges Gemisch aus zwei oder mehreren dieser ist.

5. Eine Vorgehensweise nach Ansprüchen 1, 2, 3 oder 4, wobei ein Härtungsverzögerungsmittel mit dem ersten Anteil besagten Spülschlamms mit Härtungsmittel vermischt wird.

6. Eine Vorgehensweise nach Anspruch 5, wobei das Härtungsverzögerungsmittel ein Copolymer von AMPS® und Acrylsäure, Weinsäure, Kalziumlignosulfonat, Ammoniumlignosulfonat oder eine beliebiges Gemisch aus zwei oder mehreren besagter Additive ist.

7. Eine Vorgehensweise nach Anspruch 6, wobei das Härtungsverzögerungsmittel Kalziumlignosulfonat ist und mit besagtem Spülschlamm mit Härtungsmittel in Mengen von ca. 0,1% bis 2% Massenanteil besagten Spülschlamms vermischt wird.

8. Eine Vorgehensweise nach einem der o.g. Ansprüche, wobei das Dispersionsmittel aus dem kondensierten Polymerprodukt von Aceton, Formal und Natriumsulfit mit dem ersten Anteil des Spülschlamms nach Schritt (a) vermischt wird, wobei das Dispersionsmittel in Mengen von ca. 0,1% bis 3% Masseanteil des Wassers in der Suspension vorhanden ist.

**Revendications**

1. Une méthode de forage d'un puits utilisant un fluide de forage en circulation et d'évacuation ultérieure du fluide de forage, laquelle méthode regroupe les étapes suivantes:

   (a) forage d'un puits à l'aide d'un fluide de forage contenant une suspension aqueuse de fumées de silice condensées en une quantité selon laquelle le rapport en poids entre la suspension aqueuse de fumées de silice condensées et le total des autres éléments constitutifs du fluide de forage se situe entre 25:75 et 100: 0, ladite suspension aqueuse comportant des particules de fumées de silice condensées dont les diamètres sont inférieurs à 1 micromètre et de l'eau dans un rapport en poids fumées de silice condensées:eau qui se situe entre 2:3 et 3:2;
   (b) conversion d'une première portion du dit fluide de forage en une composition cimenteuse grâce à laquelle le fluide pourra ultérieurement prendre pour former une masse cimenteuse dure en y ajoutant un agent d'activation de prise qui est un hydroxyde ou oxyde métallique de terre alcaline ou un mélange quelconque de deux ou davantage des dits agents; et
   (c) pose de la première composition de fluide de forage cimenteux à prise activée dans un emplacement souhaité ou davantage pour sa prise.

2. Une méthode selon la revendication 1, qui inclut, après l'étape (a) mais avant l'étape (b), l'étape suivante:

   (i) mise en place de tiges dans ledit puits pendant que ledit puits contient ledit fluide de forage, les dites tiges étant dimensionnées de manière à ce qu'il se forme un espace annulaire entre les tiges et les parois du dit puits; et après l'étape (b) mais avant l'étape (c), l'étape suivante:
   (ii) pompage de la première portion de fluide de forage cimenteux à prise activée vers le bas à travers l'intérieur des dites tiges et vers le haut à l'intérieur du dit espace annulaire entre les tiges et les parois du puits, ceci déplaçant une seconde portion restante du dit fluide de forage à l'intérieur du dit puits hors de ce puits, et la première portion à prise activée du dit fluide de forage étant placée dans ledit espace annulaire; et après l'étape (c), les étapes suivantes:
   (iii) conversion d'une seconde portion du fluide de forage en une composition cimenteuse grâce à laquelle il prendra ultérieurement pour former une masse cimenteuse dure en y ajoutant un agent d'activation de prise qui peut être de l'hydroxyde de calcium, de l'oxyde de magnésium et des mélanges de ceux-ci; et
   (iv) pose de ladite seconde portion de fluide de forage cimenteux à prise activée dans un emplacement souhaité ou davantage pour sa prise.

3. Une méthode selon la revendication 1 ou 2, dans laquelle le produit activateur de prise est combiné avec la première portion du fluide de forage et, selon la revendication 2, avec la seconde portion du fluide de forage en une quantité selon laquelle le rapport en poids fumées de silice condensées:activateur de prise dans ledit fluide de forage se situe entre 1:1,5 et 3;1.

4. Une méthode selon les revendications 1, 2 ou 3, dans laquelle l'activateur de prise est de l'hydroxyde de calcium, de l'hydroxyde de baryum, de l'oxyde de magnésium, de l'oxyde de strontium ou un quelconque mélange de deux de ces oxydes ou hydroxydes, ou davantage.

5. Une méthode selon les revendications 1, 2, 3 ou 4, dans laquelle un additif retardateur de prise est combiné à la première portion à prise activée du dit fluide de forage.

6. Une méthode selon la revendication 5, dans laquelle l'additif retardateur de prise est un copolymère de l'AMPS® et de l'acide acrylique, de l'acide tartirique, du lignosulfonate de calcium, du lignosulfonate d'ammonium ou un quelconque mélange de deux des dits additifs ou davantage.

7. Une méthode selon la revendication 6, dans laquelle l'additif retardateur de prise est du lignosulfonate de calcium et selon laquelle il est combiné avec ledit fluide de forage à prise activée en quantité de 0,1% à 2% du poids du dit fluide de forage.

8. Une méthode selon l'une quelconque des revendications précédentes, selon laquelle un agent de dispersion composé du polymère de condensation de l'acétone, de formaldéhyde et de sulfite de sodium est combiné à la première portion du fluide de forage conformément à l'étape (a), dans laquelle l'agent de dispersion est présent dans la suspension en une quantité de 0,1% à 3% du poids de l'eau dans ladite suspension.